Europäisches Patentamt

European Patent Office

Office européen des brevets

(11) Veröffentlichungsnummer: **0 088 292**
**A2**

(12) # EUROPÄISCHE PATENTANMELDUNG

(21) Anmeldenummer: **83101784.3**

(51) Int. Cl.³: **G 01 D 15/16**

(22) Anmeldetag: **23.02.83**

(30) Priorität: **26.02.82 DE 3207074**

(43) Veröffentlichungstag der Anmeldung: **14.09.83**
**Patentblatt 83/37**

(84) Benannte Vertragsstaaten: **FR NL**

(71) Anmelder: **SIEMENS AKTIENGESELLSCHAFT, Berlin und München Wittelsbacherplatz 2, D-8000 München 2 (DE)**

(72) Erfinder: **Heinzl, Joachim, Prof.Dr., Dreisesselbergstrasse 16, D-8000 München 90 (DE)**

(54) Schreibelement mit Piezoantrieb für Registrier- und Aufzeichnungsgeräte.

(57) Die Erfindung betrifft ein Schreibelement mit Piezoantrieb für Registrier- und Aufzeichnungsgeräte.

Das Schreibelement enthält als Vorratsbehälter für die Schreibflüssigkeit ein Kapillarsystem (7), durch das infolge einer die Füllhöhe übersteigenden Steighöhe für die Schreibflüssigkeit an den Austrittsöffnungen des Schreibelements ein Unterdruck erzeugt wird; für den Tröpfchenausstoß ist ein über Kontaktringe (11, 12) ansteuerbares Piezoelement (9) vorgesehen; die Füllstandsüberwachung erfolgt ebenfalls über die zur Ansteuerung vorgesehenen Kontaktringe (11, 12), wobei die einem Ansteuerimpuls folgende und durch den Füllstand des Vorratsbehälters beeinflußte Sprungantwort des Piezoelementes (9) bewertet wird; das Schreibelement ist rotationssymmetrisch ausgebildet und kann mittels einer Greifvorrichtung automatisch eingesetzt und gewechselt werden.

SIEMENS AKTIENGESELLSCHAFT                    Unser Zeichen
Berlin und München                           VPA  82 P 8 0 0 4 E

Schreibelement mit Piezoantrieb für Registrier- und Aufzeichnungsgeräte

Die Erfindung betrifft ein Schreibelement für Registrier-
und Aufzeichnungsgeräte gemäß dem Oberbegriff des Patentanspruches 1.

Als handelsübliche Schreibelemente für Registriergeräte,
Farbplotter oder ähnliche Geräte werden sogenannte Schreibstifte in Form von Filzschreibern oder von Kugelschreibern
verwendet. Dabei treten jedoch einige Probleme auf, die
vor allem einen vielfältigen Einsatz von mit solchen Schreibstiften ausgerüsteten Geräten begrenzen. So sind Kugelschreiber nur für relativ geringe Aufzeichnungsgeschwindigkeiten geeignet, da sie bei hohen Aufzeichnungsgeschwindigkeiten nicht die für eine optisch gute Aufzeichnung erforderliche Schreibflüssigkeitsmenge fördern können. Filzschreiber wiederum machen bei niedrigen Aufzeichnungsgeschwindigkeiten Probleme, da dann zuviel Schreibflüssigkeit auf den Aufzeichnungsträger gelangt. Im Falle besonders kleiner Schreibgeschwindigkeiten besteht sogar die
Gefahr, daß Filzschreiber vom Aufzeichnungsträger leergesaugt werden. Beide Schreibelemente setzen darüberhinaus
eine Berührung mit dem Aufzeichnungsträger voraus, was zu
starken Verschmutzungen und im Falle einer Mehrfarbenaufzeichnung zu einer Veränderung der Farbe des Schreibstiftes führen kann. Letzteres tritt z.B. dann störend in Erscheinung, wenn verschiedenfarbige Schreibstifte zum Aufzeichnen eng benachbarter Linien eingesetzt werden.

Fk 1 Obh / 22. Febr. 1982

Es ist bereits angegeben worden, anstelle der genannten Schreibstifte Schreibelemente zu benützen, die den sogenannten Piezoeffekt ausnützen. Dabei wird die Schreibflüssigkeit unter der Einwirkung eines impulsweise ansteuerbaren Piezoelementes aus einer Düse ausgestoßen. Ein unmittelbarer Kontakt zwischen Schreibelement und Aufzeichnungsträger ist dabei nicht mehr notwendig.

Für Schreibköpfe mit Piezoantrieb hat sich das sogenannte Unterdruckverfahren als besonders vorteilhaft erwiesen. Ein im Inneren der Schreibdüse wirksamer Unterdruck, der nur während des Ausstoßens eines Flüssigkeitströpfchens durch die Verformung des Piezoelementes überwunden wird, verhindert ein Ausfließen der Schreibflüssigkeit in Schreibpausen und im Ruhezustand. Der Unterdruck wird dadurch erzeugt, daß der Vorratsbehälter für die Schreibflüssigkeit auf einem tieferen Niveau als die Austrittsdüse liegt. Das ist bei einem Schreibelement für Registriergeräte in der Regel nicht möglich.

Darüberhinaus ist auch die Ausbildung des Vorratsbehälters selbst problematisch. Üblicherweise wird dazu ein mit dem Schreibkopf konstruktiv verbundener flexibler Flüssigkeitsbehälter verwendet. Für relativ kleine Schreibelemente, wie sie für Registriergeräte eingesetzt werden, macht die Verwendung derartiger Vorratsbehälter vor allem wegen des Einbringens in das Schreibelement erhebliche Schwierigkeiten.

Weiterhin stellen auch die Anschlüsse für das Piezoelement besondere Anforderungen. Die in einem bekannten Schreibkopf vorgesehenen Zuführungen über eine feste Verdrahtung kann dann nicht mehr eingesetzt werden, wenn ein Schreibelement nicht nur längs einer Schreibzeile sondern in verschiedenen wechselnden Richtungen über einen großen Bereich eines Aufzeichnungsträgers hinwegbewegt werden muß.

0088292

Weiterhin hat sich herausgestellt, daß eine Überwachung des Füllstandes derartiger Vorratsbehälter nur mit umfangreichen Schaltungen sicher gewährleistet werden kann. Für den Einsatz in Registriergeräten, bei denen die Abmessungen der Schreibelemente und damit auch die des Vorratsbehälters sehr begrenzt sind, kann diese Schreibflüssigkeitsüberwachung nicht eingesetzt werden. Andererseits ist gerade bei Registrier- und Aufzeichnungsgeräten die Füllstandsüberwachung der Schreibflüssigkeit von besonderem Interesse. Fällt nämlich die Zufuhr von Schreibflüssigkeit sozusagen ohne Vorwarnung aus, so wird eine gerade laufende Aufzeichnung unvollständig und oftmals unbrauchbar.

Aufgabe der Erfindung ist es, ein Schreibelement mit Piezoantrieb anzugeben, das unabhängig von seiner Lage nach dem Unterdruckverfahren arbeitet, und das sowohl hinsichtlich des Schreibflüssigkeitsvorratsbehälters als auch hinsichtlich der Überwachung des Füllstandes der Schreibflüssigkeit verbessert ist. Die Verbesserung soll sich dabei sowohl auf den Aufbau als auch auf die Funktion erstrekken.

Die Aufgabe wird durch die im kennzeichnenden Teil des Patentanspruches 1 angegebenen Merkmale gelöst.

Einer der wesentlichen damit verbundenen Vorteile besteht darin, daß in den Schreibdüsen ein kapillarisch erzeugter Unterdruck herrscht, und daß dieser Unterdruck unabhängig von der Lage des Schreibelements, d.h. unabhängig vom Anstellwinkel des Schreibelements gegen den Aufzeichnungsträger durch eine Abstimmung der Füllhöhe mit der Steighöhe der Schreibflüssigkeit in den Kapillaren des Kapillarsystems sicher gewährleistet ist. Dieser Unterdruck wird jeweils nur bei Ansteuerung des Piezoelementes kurzzeitig aufgehoben um eine kleine Menge der Schreibflüssigkeit auszustoßen. Damit ist ein sehr sicherer Betrieb gewährleistet.

In Ausgestaltung der Erfindung kann als Kapillarsystem ein geordnetes Bündel von einzelnen Kapillaren oder ein faserförmiges Medium, z.B. Glaswolle, verwendet werden. Der Vorratsbehälter wird dadurch klein und kann sehr leicht auch in einrelativ enges Schreibelementgehäuse eingebracht werden.

In weiterer Ausgestaltung der Erfindung sind die Kapillaren in Abstimmung mit der verwendeten Schreibflüssigkeit derart dimensioniert, daß im Bereich vor der Austrittsdüse die Steighöhe der Schreibflüssigkeit deutlich höher als die Füllhöhe ist. Damit wird der Vorteil erreicht, daß keine Kapillare ganz leergeschrieben werden kann, solange in einer anderen Kapillare noch eine größere Füllhöhe vorhanden ist.

Bildet man, wie weiter durch die Erfindung vorgeschlagen, das Schreibelement rotationssymmetrisch aus, und sieht man Kontaktringe für die Anschlüsse des Piezoelementes vor, so ergibt sich die Möglichkeit, das Schreibelement z.B. mit einem entsprechend ausgebildeten Greifer automatisch zu wechseln. Das hat insbesondere bei Schreibgeräten, bei denen mehrere, beispielsweise verschiedenfarbige Schreibelemente eingesetzt werden, erhebliche Vorteile.

Die erfindungsgemäß vorgesehenen Kontaktringe bieten darüberhinaus die Möglichkeit, eine Auswerteeinrichtung zur Füllstandsüberwachung anzuschalten, in der die vom Füllstand im Vorratsbehälter abhängigen Reaktionen des Piezoelementes auf einen Ansteuerimpuls ausgewertet werden. Damit ist eine ständige, einfache und sichere Überwachung des Schreibflüssigkeitsfüllstandes gewährleistet.

Die Erfindung wird im folgenden anhand der Zeichnungen erläutert. Dabei zeigen

0088292

Fig. 1 ein Ausführungsbeispiel für ein Schreibelement mit einem geordneten Kapillarsystem,

Fig. 2 eine Darstellung des Unterdrucks in Abhängigkeit vom Anstellwinkel des Schreibelements gegen einen Aufzeichnungsträger und

Fig. 3 ein Ausführungsbeispiel für eine Aufnahme- oder Haltevorrichtung eines Schreibelements.

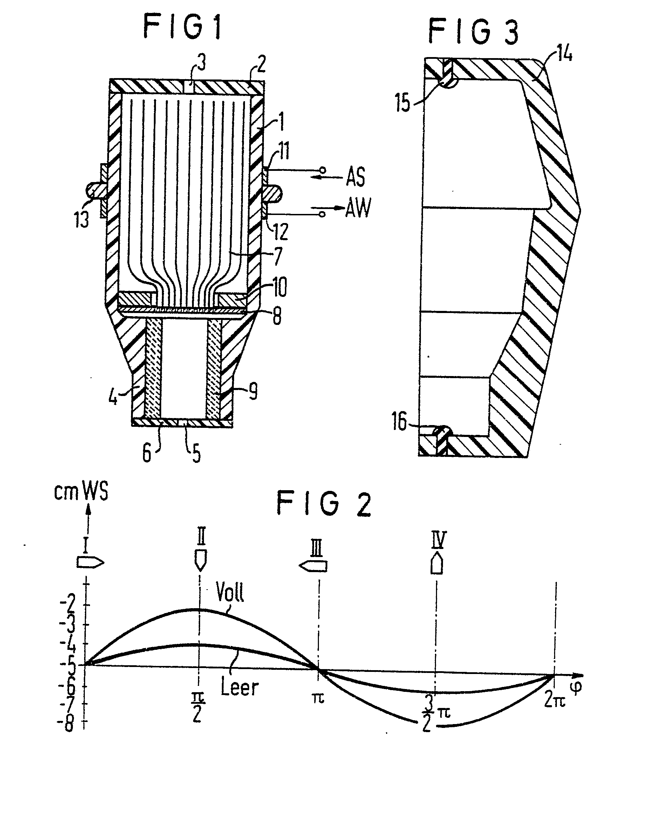

Das in Fig. 1 dargestellte Schreibelement besteht aus einem Gehäuseteil 1, der mit einer Kappe 2 nach oben abgeschlossen ist. In dieser befindet sich eine Lufteintrittsöffnung 3. Am anderen Ende läuft das Gehäuse 1 in eine Austrittsdüse 4 aus, die ebenfalls mit einer, eine Austrittsdüse 5 aufweisenden Platte 6 abgeschlossen ist. Im Gehäuse 1 befindet sich das Kapillarsystem 7, das in diesem Fall als geordnetes Bündel von Stäben oder Röhren ausgebildet ist. Diese enden in Richtung zur Austrittsdüse 4 an einer Drosselplatte 8. Innerhalb der Austrittsdüse 4 befindet sich ein Piezoelement 9. Im Bereich vor der Austrittsdüse 4 sind die Kapillaren des Kapillarsystems 7 verengt, was im Ausführungsbeispiel durch einen Ring 10 bewirkt wird. Am Gehäuse 1 des Schreibelements befinden sich zwei Kontaktringe 11 und 12, die die Anschlüsse für die Ansteuerimpulse AS des Piezoelementes bilden. Das Schreibelement kann am Gehäuse noch einen Ansatz 13 aufweisen, mit dem das Erfassen durch eine hier nicht dargestellte Greifvorrichtung, z.B. beim automatischen Einsetzen oder Wechseln erleichtert wird.

Die Funktion des Schreibelementes ist im einzelnen folgende.

Die einzelnen Kapillaren des Kapillarsystems 7 ergeben für die Schreibflüssigkeit eine konstante Steighöhe, die grösser ist als die maximale Füllhöhe. Die Steighöhe ist bekanntlich abhängig von der Oberflächenspannung und der Dichte der verwendeten Flüssigkeit, von der Erdbeschleunigung und von dem Randwinkel zwischen der Flüssigkeit und dem Material, aus dem die Kapillaren bestehen. Z.B. beträgt in einem Rohr von 150 $\mu$ die Steighöhe etwa 60mm. Unter Berücksichtigung der Schreibflüssigkeitseigenschaften läßt sich somit ein Unterdruck an der Austrittsöffnung 5 der Austrittsdüse 4 erzeugen, der in jeder Lage des Schreibelementes einerseits ein Ausfließen von Schreibflüssigkeit verhindert, andererseits bei Ansteuerung des Piezoelementes überwunden werden kann, um ein Tröpfchen auszustoßen. Bedarfsweise kann z.B. vor der Inbetriebnahme der Druck kurzzeitig erhöht werden, indem z.B. eine manuell bedienbare Pumpe an die Lufteintrittsöffnung 3 angeschlossen wird. Der Verlauf des Unterdrucks ist in Fig. 2 abhängig vom Anstellwinkel $\varphi$ des Schreibelementes angegeben. Bei waagrechtem Betrieb (Stellungen I und III) entspricht der sich einstellende Unterdruck der Steighöhe -h. Ist das Schreibelement senkrecht nach oben gerichtet (Stellung II), so vermindert sich der Unterdruck um die Füllhöhe im Vorratsbehälter. Ist das Schreibelement senkrecht nach oben gerichtet (Stellung IV), so erhöht sich der Unterdruck um die Füllhöhe. Dazwischen findet ein sinusähnlicher Übergang statt. Da der wirksame Unterdruck von der Füllhöhe abhängt, ergibt sich ein Betriebsbereich, der wie in Fig. 2 dargestellt, durch die beiden Kurven für "voll" und "leer" begrenzt ist.

Durch die Verengung am der Austrittsdüse 4 zugewandten Ende des Kapilalrsystems 7 wird erreicht, daß die Steighöhe in diesem Bereich gegenüber der Steighöhe in anderen Bereichen des Vorratsbehälters deutlich überhöht ist. Damit ist sichergestellt, daß keine Kapillare ganz leerlaufen kann, solange noch in einer anderen Kapillare eine größere
Füllhöhe vorhanden ist.

Zur Überwachung der Schreibflüssigkeit können in vorteilhafter Weise die zur Ansteuerung des Piezoelementes vorgesehenen Kontaktringe herangezogen werden. Man macht dazu davon Gebrauch, daß das Piezoelement nach seiner Ansteuerung, wenn es in seine Ruhe- oder Ausgangslage zurückgeht, durch die im von der Schreibflüssigkeit erfüllten
Raum verursachten Vorgänge beeinflußt wird. Diese Vorgänge
beruhen im wesentlichen auf Reflexionsvorgängen, die durch
das Piezoelement verursacht werden, wenn dieses beim Ausstoß einer kleinen Flüssigkeitsmenge eine Druckänderung
in der Schreibflüssigkeit bewirkt. Die Reflexionsvorgänge
sind abhängig von der Flüssigkeitsmenge im Inneren des
Systems, praktisch also vom Füllstand im Vorratsbehälter.
Die gleichen Anschlüsse, die für die Ansteuerung des Piezoelementes vorgesehen sind, werden somit auch zur Schreibflüssigkeitsüberwachung eingesetzt, in-dem jeweils zwischen
den Ansteuerimpulsen, vorzugsweise jeweils unmittelbar nach
einem Ansteuerimpuls, die als Reaktion des Piezoelementes
auftretenden Reaktionsimpuls AW (sogenannte Sprungantwort
des Piezoelementes) einer Auswerteschaltung zugeführt werden.

Im Rahmen der Erfindung liegt es auch, anstelle des im Ausführungsbeispiel nach Fig. 1 verwendeten geordneten Bündels ein Kapillarsystem vorzusehen, das aus einem faserigen Material, beispielsweise aus Glaswolle besteht. Die
anhand von Fig. 1 gemachten Ausführungen über Aufbau und
Funktionsweise des Schreibelementes gelten analog auch für
diesen Fall. Die Verengung im Bereich vor der Austrittsdüse wird in diesem Falle durch die konstruktive Gestaltung
des Schreibelmentgehäuses bewirkt. In analoger Weise, wie
anhand von Fig. 1 beschrieben, führt das zu einer höheren
Packungsdichte des Kapillarsystems in diesem Bereich und damit zum gleichen Effekt, wie die Verengung der stab-
oder röhrenförmig ausgebildeten geordneten Kapillaren nach
Fig. 1.

Die erfindungsgemäße Ausgestaltung eines Schreibelementes
kann in vorteilhafter Weise in einem Registriergerät Verwendung finden, bei dem eine Vielzahl von Schreibelementen eingesetzt wird, die jeweils bedarfsweise z.B. einzeln
nacheinander von einer Greifvorrichtung automatisch erfaßt, über die Kontaktringe mit der Ansteuer- und der Auswerteeinrichtung verbunden und in die richtige Schreibposition gebracht werden. Die einzelnen Schreibelemente können dabei z.B. mit verschiedenfarbiger Schreibflüssigkeit
gefüllt sein. Gestaltet man die Schreibelemente in ihren
Abmessungen derart, daß sie einer dem Schreib- oder Registriergerät zugeordneten Aufnahme- oder Haltevorrichtung
angepaßt sind, so kann sichergestellt werden, daß in der
Ruhelage der einzelnen Schreibelemente sowohl die Lufteintrittsöffnung als auch die Austrittsöffnung durch ein Abdeckelement verschlossen sind. Ein Beispiel dafür zeigt
Fig. 3. Die Aufnahme- oder Haltevorrichtung besteht hier
aus einem einseitig offenen Gehäuse 14, in das das Schreibelement während Betriebspausen eingeführt wird. Dabei bilden die z.B. aus elastischem Material bestehenden propfenartigen Elemente 15 und 16 eine gute Abdeckung und Abdichtung der Öffnungen 3 und 5 des Schreibelements. Auch bei
längeren Ruhezeiten oder in Betriebspausen wird dadurch
ein Austrocknen oder ein Verschmutzen dieser kleinen Öffnungen vermieden.

7 Patentansprüche

3 Figuren

BAD ORIGINAL

Patentansprüche — 9 —

1. Vorrichtung für ein Schreibelement in Registrier- oder Aufzeichnungsgeräten mit einem Vorratsbehälter für Schreibflüssigkeit und einem Piezoelement als Antriebselement für den Ausstoß von Schreibflüssigkeit, dadurch gekennzeichnet, daß das Piezoelement (9) im Bereich der Austrittsdüse (4) angeordnet ist, daß zur Ansteuerung des Piezoelements (9) am Schreibelement Kontaktflächen (11,12) angeordnet sind, und daß der Vorratsbehälter für die Schreibflüssigkeit aus einem Kapillarsystem (7) besteht, das derart dimensioniert ist, daß in Abstimmung mit den Eigenschaften der Schreibflüssigkeit die Steighöhe der Schreibflüssigkeit höher ist als deren Füllhöhe.

2. Vorrichtung nach Anspruch 1, dadurch gekennzeichnet, daß im Bereich vor der Austrittsdüse (4) die Schreibflüssigkeit führenden Kanäle des Kapillarsystems (7) verengt sind, und daß in diesem Bereich die Steighöhe der Schreibflüssigkeit deutlich über der Füllhöhe liegt.

3. Vorrichtung nach Anspruch 1 und 2, dadurch gekennzeichnet, daß das Kapillarsystem (7) durch ein geordnetes Bündel von einzelnen Kapillaren besteht, die im Bereich vor der Austrittsdüse (4) verengt sind.

4. Vorrichtung nach Anspruch 1 und 2, dadurch gekennzeichnet, daß das Kapillarsystem durch ein faseriges Medium gebildet ist, dessen Packungsdichte im Bereich vor der Austrittsdüse (4) erhöht ist.

5. Vorrichtung nach Anspruch 1,
d a d u r c h   g e k e n n z e i c h n e t , daß das
Schreibelement rotationssymmetrisch ausgebildet ist, und
Kontaktringe (11,12) zur Ansteuerung des Piezoelementes
(9) aufweist.

6. Vorrichtung nach Anspruch 5,
d a d u r c h   g e k e n n z e i c h n e t , daß über
die Kontaktringe (11,12) eine Auswerteeinrichtung anschließbar ist, die zwischen den Ansteuerimpulsen für den tröpfchenweisen Ausstoß der Schreibflüssigkeit, vorzugsweise jeweils nach Beendigung eines Ansteuerimpulses (AS) die vom
Füllstand des Vorratsbehälters abhängigen Reaktionsimpulse (AW) des Piezoelementes (9) zur Füllstandsanzeige auswertet.

7. Vorrichtung nach einem der Ansprüche 1 bis 6,
d a d u r c h   g e k e n n z e i c h n e t , daß das
Schreibelement in seinen Abmessungen derart gestaltet ist,
daß es in einer Ruhestellung in eine Aufnahme- oder Haltevorrichtung (14) einschwenkbar ist, und daß die Aufnahmeode Haltevorrichtung dabei mindestens die Lufteintrittsöffnung (3) und die Austrittsöffnung (5) verschließt.

FIG 1

FIG 3

FIG 2

$cmWS$

Voll

Leer

$\frac{\pi}{2}$ $\pi$ $\frac{3}{2}\pi$ $2\pi$ $\varphi$